# EUROPÄISCHE PATENTSCHRIFT

(11) **EP 0 310 896 B1**
(45) Veröffentlichungstag und Bekanntmachung des Hinweises auf die Patenterteilung: **02.03.1994**
(21) Anmeldenummer: 88115746.5
(22) Anmeldetag: 24.09.1988
(51) Int. Cl.: C08G 18/10, C08G 18/66, C08K 3/00

(54) **Verfahren zur Herstellung von Formkörpern oder Folien**
Process for the preparation of mouldings or films
Procédé pour la préparation de pièces moulées ou de films

(30) Priorität: 06.10.1987 DE 3733756; 28.01.1988 DE 3802427
(43) Veröffentlichungstag der Anmeldung: 12.04.1989
(73) Patentinhaber: BAYER AG, 51368 Leverkusen (DE)
(72) Erfinder: Wagner, Joachim, Dr., D-5000 Köln 80 (DE); Rasshofer, Werner, Dr., D-5000 Köln 80 (DE); Eisele, Ulrich, Dr., D-5090 Leverkusen 1 (DE); Jürgens, Eberhard, Dr., D-5000 Köln 60 (DE); Weber, Christian, Dr., D-5090 Leverkusen 1 (DE); Meier, Erich, Dr., D-5090 Leverkusen 1 (DE)

(56) Entgegenhaltungen:
- EP-A- 0 081 701
- US-A- 3 484 412
- US-A- 4 218 543

## Beschreibung

Die vorliegende Erfindung betrifft ein Verfahren zur Herstellung von Formkörpern oder von Folien auf Basis von Harnstoffgruppen und gegebenenfalls Urethangruppen aufweisenden Polyisocyanat-Polyadditionsprodukten durch thermoplastische Formgebung, wobei als Polyisocyanat-Polyadditionsprodukte solche auf Basis von höherfunktionellen Verbindungen mit gegenüber Isocyanatgruppen reaktionsfähigen Wasserstoffatomen mit einem hohen Harnstoffgehalt verwendet werden.

Thermoplastische Polyurethanelastomere sind bekannt (vgl. z.B. Becker/Braun, Kunststoffhandbuch, Band 7, "Polyurethane", Carl Hanser Verlag, München/Wien (1983), Seiten 428 ff.). Bei den bislang bekannt gewordenen, thermoplastisch verarbeitbaren Polyurethanelastomeren handelt es sich um solche auf Basis von Diisocyanaten, höhermolekularen Dihydroxyverbindungen, insbesondere höhermolekularen Polyesterdiolen und niedermolekularen Diolen als Kettenverlängerungsmittel, wobei die Polyurethane möglichst linear aufgebaut, d.h. keine Vernetzungs- bzw. Verzweigungsstellen im Molekül aufweisen sollten. Auch von der Mitverwendung von Diaminen als Kettenverlängerungsmittel bei der Herstellung von thermoplastisch verarbeitbaren Polyurethanelastomeren hat man bislang abgeraten (vgl. das oben zitierte Handbuch, Seite 428, Absatz 8.2.1) da durch die Mitverwendung von Diamin-Kettenverlängerungsmittel Harnstoffgruppen in das Molekül eingebaut werden, die als Hartsegmente angesehen werden, die einer thermoplastischen Verarbeitbarkeit entgegenstehen.

Jetzt wurde jedoch überraschend gefunden, daß auch Harnstoffgruppen aufweisende Polyisocyanat-Polyadditionsprodukte, in denen die Anzahl der Harnstoffgruppen die Anzahl der Urethangruppen übersteigt, und die zudem unter Mitverwendung von verzweigten, höhermolekularen Aufbaukomponenten mit gegenüber Isocyanatgruppen reaktionsfähigen Gruppen hergestellt worden sind, thermoplastisch verarbeitbar sind. Außerdem wurde gefunden, daß die guten mechanischen Eigenschaften dieser Polyisocyanat-Polyadditionsprodukte durch die thermoplastische Formgebung nicht negativ beeinflußt werden und zwar weitgehend unabhängig davon, ob die Polyisocyanat-Polyadditionsprodukte Füll- und/oder Verstärkungsstoffe enthalten.

Gegenstand der Erfindung ist ein Verfahren zur Herstellung von Formkörpern oder Folien auf Basis von Polyisocyanat-Polyadditionsprodukten einer Dichte von mindestens 0,8 g/cm³ durch Weiterverarbeitung von elastomeren Polyisocyanat-Polyadditionsprodukte durch erneute thermoplastische Formgebung bei bei mindestens 50°C liegenden Temperaturen und mindestens 5 bar liegenden Drücken, dadurch gekennzeichnet, daß man als elastomere Polyisocyanat-Polyadditionsprodukte solche verwendet, die durch Umsetzung von
a) aromatischen Polyisocyanaten,
b) Verbindungen mit einem Molekulargewicht zwischen 1800 und 12000 welche im statistischen Mittel mindestens 2,5 gegenüber Isocyanatgruppen reaktionsfähige Gruppen d.h. eine über 2,5 liegende mittlere Funktionalität aufweisen,
gegebenenfalls
c) Diaminen mit zwei primären und/oder sekundären, aromatisch gebundenen Aminogruppen des Molekulargewichtsbereichs 108 bis 400,
sowie gegebenenfalls
d) gegebenenfalls Ethergruppen aufweisenden (Cyclo)alkanpolyolen oder (Cyclo)alkanpolyaminen des Molekulargewichtsbereichs 60 bis 1799
sowie gegebenenfalls unter Mitverwendung von
e) den aus der Polyurethanchemie an sich bekannten Hilfs- und Zusatzmitteln
unter Einhaltung einer Isocyanatkennzahl von 60 bis 140 im Ein- oder Mehrstufenverfahren hergestellt worden sind, mit der Maßgabe, daß mindestens eine der Komponenten c) oder d) in einer solchen Menge mitverwendet wird, daß die Gesamtmenge der Komponenten c) und d) mindestens 5 Gew.-%, bezogen auf das Gewicht der Komponente b) beträgt.

Gegenstand der Erfindung ist ferner eine Ausführungsform bei der man als Polyisocyanat-Polyadditionsprodukte solche verwendet, bei denen das Molverhältnis von eingebauten Harnstoffgruppen zu eingebauten Urethangruppen bei mindestens 2:1 liegt. Weiterhin ein derartiges Verfahren, das dadurch gekennzeichnet ist daß die der thermoplastischen Formgebung zuzuführenden Polyisocyanat-Polyadditionsprodukte Füll-und/oder Verstärkungsstoffe in einer Menge von bis zu 80 Gew.-%, bezogen auf das Gesamtgewicht, enthalten. Ferner ein Verfahren, das dadurch gekennzeichnet ist, daß die der thermoplastischen Formgebung zuzuführenden Polyisocyanat-Polyadditionsprodukte in Form von Granulaten, Schnipseln und/oder anderen Klein- und Kleinstteilen vorliegen oder daß die der thermoplastischen Formgebung zuzuführenden Polyisocyanat-Polyadditionsprodukte in Form von Platten vorliegen, die durch Umsetzung der Ausgangsmaterialien in geschlossenen Formen nach dem Reaktionsspritzgußverfahren hergestellt worden sind. Eine Ausführungsform betrifft ein Verfahren, das dadurch gekennzeichnet ist, daß die thermoplastische Formgebung durch Tiefziehen der Platten erfolgt.

Bei den beim erfindungsgemäßen Verfahren einzusetzenden Polyisocyanat-Polyadditionsprodukten handelt es sich um Elastomere des bevorzugten Dichtebereichs von 0,8 bis 1,4 g/cm³. Der besonders bevorzugte Dichtebereich liegt bei 1,0 bis 1,3 g/cm³. Derartige Elastomere sind an sich bekannt, sie wurden bislang im allgemeinen nach der Reaktionsspritzgußtechnik in geschlossenen Formen hergestellt (vgl. z.B. DE-AS 2 622 951, DE-OS 3 133 859, US-PS 4 065 410, US-PS 4 218 543 oder EP-B-00 81 701).

Bislang ging man davon aus, daß die nach der Reaktionsspritzgußtechnik hergestellten Formkörper wegen der Mitverwendung von höherfunktionellen, höhermolekularen Verbindungen mit gegenüber Isocyanatgruppen reaktionsfähigen Wasserstoffatomen und insbesondere bei Vorliegen von eingebauten Harnstoffgruppen in hoher Konzentration nicht thermoplastisch weiterverarbeitbar sein würden. Aus diesem Grund wurden bislang zur Herstellung der Elastomeren geschlossene Formen verwendet, deren Formgestaltung dem angestrebten Endprodukt (z.B. Automobilstoßstangen-Form) entspricht, Mit Hilfe des erfindungsgemäßen Verfahrens ist es jedoch möglich, elastomere Polyisocyanat-Polyadditionsprodukte, die den genannten Produkten des Standes der Technik in chemischer Hinsicht entsprechen, thermoplastisch zu verformen, so daß man auf die Formgebung während der Herstellung, d.h. auf die Verwendung von Formen, die dem angestrebten Endprodukt entsprechen, nicht mehr angewiesen ist.

Bei den gemäß erfindungsgemäßem Verfahren unter thermoplastischer Formgebung zu verarbeitenden Polyisocyanat-Polyadditionsprodukten handelt es sich um Umsetzungsprodukte der obengenannten Ausgangsmaterialien.

Geeignete aromatische Polyisocyanate a) sind insbesondere die in EP-B-00 81 701, Kolonne 3, Zeile 30 bis Kolonne 4, Zeile 25 genannten Verbindungen, wobei die dort als bevorzugt herausgestellten Polyisocyanate auch im Rahmen der vorliegenden Erfindung bevorzugt sind.

Bei der Komponente b) handelt es sich um Verbindungen mit gegenüber Isocyanatgruppen reaktionsfähigen Gruppen des Molekulargewichtsbereichs 1800 bis 12 000, vorzugsweise 3000 bis 7000 oder um Gemische derartiger Verbindungen, wobei die Komponente b) im Sinne der Isocyanat-Additionsreaktion eine über 2,5 liegende (mittlere) Funktionalität aufweist. Vorzugsweise liegt die (mittlere) Funktionalität der Komponente b) bei 2,5 bis 3,0, insbesondere bei 2,8 bis 3,0. Besonders gut als Komponente b) geeignete Verbindungen sind, diesen Ausführungen entsprechende, Polyetherpolyole bzw. Gemische von Polyetherpolyolen wie sie in DE-AS 2 622 951, Kolonne 6, Zeile 65 - Kolonne 7, Zeile 47 offenbart sind, wobei auch erfindungsgemäß solche Polyetherpolyole bevorzugt sind, deren Hydroxylgruppen zumindest zu 50 %, vorzugsweise zumindest zu 80 % aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den obengemachten Ausführungen entsprechen, jedoch gegenüber den Polyetherpolyolen weniger bevorzugt.

Als Ausgangskomponente b) ebenfalls gut geeignet sind, obigen Ausführungen entsprechende, Aminopolyether oder Gemische von Aminopolyethern, d.h. Polyether mit gegenüber Isocyanatgruppen reaktionsfähigen Gruppen, die zumindest zu 50 Äquivalent-%, vorzugsweise zumindest zu 80 Äquivalent-% aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40 genannten Verbindungen.

Als Komponente b) können selbstverständlich auch beliebige Gemische der beispielhaft genannten Polyhydroxylverbindungen mit den beispielhaft genannten Aminopolyethern verwendet werden.

Bei der gegebenenfalls mitzuverwendenden Komponente c) handelt es sich um aromatischeDiamine der in EP-B-00 81 701, Kolonne 5, Zeile 58 bis Kolonne 6, Zeile 34 beispielhaft genannten Art, wobei auch erfindungsgemäß die dort als bevorzugt herausgestellten Diamine bevorzugt sind.

Bei den gegebenenfalls als weitere Aufbaukomponenten mitzuverwendenden Polyolen oder Polyaminen handelt es sich um beliebige nicht-aromatische Verbindungen mit mindestens zwei gegenüber Isocyanatgruppen reaktionsfähigen Gruppen des Molekulargewichtsbereichs 60 bis 1799, vorzugsweise 62 bis 500, insbesondere 62 bis 400. In Betracht kommen beispielsweise mehrwertige Alkohole wie sie in EP-B-00 81 701, Kolonne 9, Zeilen 32 bis 50 offenbart sind. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxy-cyclohexan oder 1,4-Bis-hydroxymethyl-cyclohexan.

Es ist ein wesentlicher Punkt, daß bei der Herstellung der Elastomeren mindestens eine der Komponenten c) oder d) zur Anwendung gelangt und zwar in solchen Mengen, daß der Gewichtsanteil der Komponenten c) und/oder d), bezogen auf das Gewicht der Komponente b) mindestens 5 Gew.-%, vorzugsweise mindestens 10 Gew.-% beträgt. Besonders bevorzugt werden die Elastomeren unter alleiniger Verwendung von aromatischen Diaminen der unter c) beispielhaft genannten Art hergestellt, wobei deren Menge und die Menge der in der Komponente b) gegebenenfalls vorliegenden Aminogruppen so bemessen wird, daß in den Elastomeren das Molverhältnis von Harnstoffgruppen zu Urethangruppen bei mindestens 2:1 liegt.

Bei den bei der Herstellung der Polyisocyanat-Polyadditionsprodukte gegebenenfalls mitzuverwendenden Hilfs- und Zusatzmitteln e) handelt es sich beispielsweise um innere Formtrennmittel, Katalysatoren für die Polyisocyanat-Polyadditionsreaktion, Treibmittel, oberflächenaktive Zusatzstoffe, Zellregler, Pigmente, Farbstoffe, Flammschutzmittel, Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31 beispielhaft beschrieben sind.

Zu den bevorzugten, gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln oder Kohlefasern, wobei diese Füll- und/oder Verstärkungsstoffe in Mengen von bis zu 80 Gew.-%, vorzugsweise bis zu 30 Gew.-%, bezogen auf das Gesamtgewicht der gefüllten bzw. verstärkten Polyisocyanat-Polyadditionsprodukte mitverwendet werden können.

Die Herstellung der Polyisocyanat-Polyadditionsprodukte erfolgt vorzugsweise nach dem Einstufen-Verfahren dergestalt, daß man die Polyisocyanatkomponente a) mit einem Gemisch der Komponenten b) bis e) unter Verwendung geeigneter Mischapparaturen vermischt und zur Reaktion bringt. Grundsätzlich ist es auch möglich, die Polyisocyanat-Polyadditionsprodukte nach einem "modifizierten Einstufenverfahren" umzusetzen, gemäß welchem die Polyisocyanat-Komponente a) mit einem Teil der Komponente b) und gegebenenfalls der Komponente d) unter Bildung von NCO-Semiprepolymeren umsetzt, welche anschließend einstufig mit dem Gemisch der restlichen Komponenten zur Reaktion gebracht werden. Auch die Herstellung der Elastomeren nach dem klassischen Prepolymerverfahren ist prinzipiell denkbar. In allen Fällen liegt die NCO-Kennzahl (Anzahl der NCO-Gruppen dividiert durch die Anzahl an NCO-reaktiven Gruppen, multipliziert mit 100) bei 60 bis 140, vorzugsweise bei 80 bis 120, insbesondere 95 bis 115.

Wie bereits oben ausgeführt, wird vorzugsweise die Komponente c) (unter Einbeziehung der gegebenenfalls in der Komponente b) vorliegenden Aminogruppen) so bemessen, daß in den Elastomeren das Molverhältnis von Harnstoffgruppen zu Urethangruppen bei mindestens 2:1 liegt. Besonders bevorzugt liegt dieses Verhältnis bei mindestens 5:1. In der Praxis bedeutet dies, daß vorzugsweise die Komponente c) in einer Menge von 5 bis 50, vorzugsweise 10 bis 40 Gew.-%, bezogen auf das Gewicht der Komponente b) eingesetzt wird.

Die Herstellung der Polyisocyanat-Polyadditionsprodukte kann, wie beispielsweise in DE-AS 2 622 951, US-PS 4 218 543 oder EP-B-00 81 701 beschrieben, nach dem Verfahren der Reaktionsspritzgußtechnik in geschlossenen Formen erfolgen, jedoch ist es auch möglich, die Polyisocyanat-Polyadditionsprodukte ohne Mitverwendung von Formen herzustellen, beispielsweise dergestalt, daß man das die Mischapparatur verlassende Reaktionsgemisch auf geeignete Unterlagen, beispielsweise Bleche aufträgt und dort ausreagieren läßt.

Die Polyisocyanat-Polyadditionsprodukte weisen vorzugsweise eine Dichte von 0,8 bis 1,4, insbesondere 1,0 bis 1,3 g/cm³ auf, dies bedeutet, daß die Mitverwendung von Treibmitteln allenfalls in geringen Mengen erfolgt, um eine gewisse mikroporöse Struktur zu erhalten, oder um die Verarbeitbarkeit der Reaktionsgemische zu erleichtern (verbesserte Fließfähigkeit).

Die Durchführung des erfindungsgemäßen Verfahrens, d.h. die thermoplastische Verarbeitung der Polyisocyanat-Polyadditionsprodukte kann unter Verwendung beliebiger, hierfür geeigneter, bekannter Apparaturen wie beispielsweise Extrudern oder Pressen erfolgen.

Zur erfindungsgemäßen thermoplastischen Formgebung sind die Polyisocyanat-Polyadditionsprodukte in der unterschiedlichsten Ausgangsform geeignet. So ist es beispielsweise möglich, Platten, die nach dem Prinzip der Reaktionsspritzgußtechnik in geschlossenen Plattenformen hergestellt worden sind, in Tiefziehpressen weiter zu verformen oder in zerkleinerter Form (Granulate oder Pulver) thermoplastisch zu neuen Formkörpern zu verarbeiten. Die gilt selbstverständlich auch für die ohne Verwendung von Formen hergestellten Polyisocyanat-Polyadditionsprodukte. Ebenfalls können plattenförmig vorliegende Polyisocyanat-Polyadditionsprodukte zu Folien beliebiger Dicke weiterverarbeitet werden.

Die erfindungsgemäß aufgefundene Möglichkeit, die genannten Polyisocyanat-Polyadditionsprodukte thermoplatisch zu verformen gestattet insbesondere auch die Herstellung von Formkörpern aus Granulaten, Schnipseln und/oder oder anderen Klein- und Kleinstteilen, wie sie beispielsweise bei der bislang erfolgten Herstellung und Verwendung von Formkörpern auf Basis der Polyisocyanat-Polyadditionsprodukten als Nebenprodukte bzw. Abfall anfielen und bislang verbrannt wurden.

Die thermoplastische Verarbeitung der Polyisocyanat-Polyadditionsprodukte erfolgt im allgemeinen bei einem Druck von mindestens 5 bar, vorzugsweise innerhalb des Druckbereichs von 50 bis 400 bar, insbesondere 100 bis 200 bar bei einer Temperatur von mindestens 50°C, vorzugsweise 100 bis 200°C und insbesondere 130 bis 170°C, wobei die Verformungszeiten bei 1 Sekunde bis 10 Minuten liegen können. Selbstverständlich müssen bei ein und demselben Elastomeren bei niederen Drucken innerhalb der genannten Bereiche höhere Temperaturen innerhalb der genannten Bereiche und umgekehrt zur Anwendung gelangen.

Die thermoplastische Formgebung kann beispielsweise dergestalt erfolgen, daß man das der thermoplastischen Formgebung zuzuführende Polyisocyanat-Polyadditionsprodukt in ein Verformungswerkzeug (Presse) einbringt, das auf die Temperatur, bei welcher die thermoplastische Formgebung erfolgt, erhitzt bzw. vorerhitzt wird. Die Erhitzung des Polyisocyanat-Polyadditionsprodukts erfolgt somit durch seinen Kontakt mit dem heißen Werkzeug.

Es ist jedoch zur thermoplastischen Formgebung nicht unbedingt erforderlich, das Verformungswerkzeug auf die bei der thermoplastischen Formgebung zur Anwendung gelangende Temperatur zu erhitzen, sondern vielmehr ausreichend, wenn das der thermoplastischen Formgebung zuzuführende Polyisocyanat-Polyadditionsprodukt auf diese Temperatur vorerhitzt wird, bevor es in das Verformungswerkzeug eingebracht wird.

Durch die erfindungsgemäße Verformung werden die ausgezeichneten mechanischen Eigenschaften der Polyisocyanat-Polyadditionsprodukte nicht nur nicht nachteilhaft beeinflußt, vielmehr kann oftmals eine Verbesserung erreicht werden.

### Beispiel 1

### (Herstellung von Polyisocyanat-Polyadditionsprodukten)

### A-Komponente:

77 Gew.-Teile eines Polyethertriols der OH-Zahl 28, hergestellt durch Propoxylierung von Trimethylolpropan und anschließende Ethoxylierung des Propoxylierungsprodukts (PO:EO-Gewichtsverhältnis = 83:17),
23 Gew.-Teile eines Gemischs aus 65 Gew.-Teilen 1-Methyl-3,5-diethyl-2,4-diaminobenzol und 35 Gew.-Teilen 1-Methyl-3,5-diethyl-2,6-diaminobenzol (DETDA),
0,3 Gew.-Teile Triethylendiamin und
0,1 Gew.-Teile eines handelsüblichen Zinnkatalysators (UL 28 der Firma Witco Co.)
wurden zu einer A-Komponente vereinigt.

### B-Komponente:

Ein modifiziertes Polyisocyanat mit einem NCO-Gehalt von 24,5 %, hergestellt durch Umsetzung von 4,4′-Diisocyanatodiphenylmethan mit einer unterschüssigen Menge an Tripropylenglykol.

### Herstellung von Formteilen:

a) Zur Herstellung von Formteilen wurde eine Einkolben-Hochdruckdosieranlage mit MQ-Mischkopf (Maschinenfabrik Hennecke, Sankt Augustin) und Zwangssteuerung verwendet.
   100 Gew.-Teile der A-Komponente und 51 Gew.-Teile der B-Komponente (NCO-Kennzahl = 100) wurden jeweils unter Verwendung der genannten Mischapparatur innig miteinander vermischt und nach dem Prinzip der Reaktionsspritzgußtechnik in einer geschlossenen Plattenform zu Platten der Abmessung 300 x 200 x 4 mm verarbeitet. Die Rohstofftemperatur betrug hierbei 35 bis 40°C, die Formtemperatur lag bei 60°C. Vor Befüllen der Form wurden deren Innenwände jeweils mit einem handelsüblichen äußeren Trennmittel auf Wachsbasis (®Acmos-Fluoricon 36/34 der Firma Acmos) beschichtet. Die Einfüllzeit betrug 1,25 Sekunden, die Formstandzeit lag bei 30 Sekunden.
   Auf diese Weise wurden plattenförmige Polyisocyanat-Polyadditionsprodukte einer Dichte von 1,1 g/cm³ erhalten.
b) Die unter a) beschriebene Herstellungsweise wurde durch Veränderung der Isocyanatkennzahl modifiziert. Es wurden 56,5 Gew.-Teile der B-Komponente (Kennzahl = 110) pro 100 Gew.-Teilen der A-Komponente verwendet. Auf diese Weise wurden plattenförmige Polyisocyanat-Polyadditionsprodukte einer Dichte von 1,1 g/cm³ erhalten.
c) Die unter a) beschriebene Arbeitsweise wurde erneut durch Veränderung der NCO-Kennzahl variiert. Es wurden 62 Gew.-Teile der B-Komponente (Kennzahl = 120) pro 100 Gew.-Teilen der A-Komponente eingesetzt. Auf diese Weise wurden plattenförmige Polyisocyanat-Polyadditionsprodukte der Dichte 1,1 g/cm³ erhalten.

### Beispiele 2 und 3 (allgemeine Verfahrensbedingungen)

In den nachfolgenden Beispielen 2 und 3 wird ebenfalls die Herstellung von Formteilen von Polyisocyanat-Polyadditionsprodukten beschrieben, wobei die nachstehend genannten Rezepturen wie folgt verarbeitet wurden:
Maschine: Laborkolbendosiergerät;
Form: Plattenform aus Stahl der inneren Abmessung 300 x 200 x 4 mm;
Mischkopf: MQ 8 der Firma Hennecke, Sankt Augustin;
Arbeitsdruck: 180 bar;
Einfüllzeit: 1 Sekunde;
Rohstoff-Temperaturen: 65°C (A-Komponente) bzw. 50°C (B-Komponente);
Formtemperatur: 70°C;
Formstandzeit: 30 Sekunden;
äußeres Formtrennmittel: RCTW 2006 der Firma Chemtrend.

### Beispiel 2

### A-Komponente:

58,6 Gew.-Teile eines aromatischen Aminopolyethers der NH-Zahl 44, hergestellt durch Hydrolyse eines NCO-Prepolymeren bei 90°C unter Verwendung eines Gemischs aus 3,5 Gew.-Teilen Dimethylformamid, 0,1 Gew.-Teilen Natriumhydroxid und 100 Gew.-Teilen Wasser pro 1000 Gew.-Teilen des Prepolymeren und anschließender destillativer Entfernung der flüchtigen Bestandteile. Das NCO-Prepolymer wies einen NCO-Gehalt von 3,4 % auf und wurde durch Umsetzung von 2,4-Diisocyanatotoluol mit einer unterschüssigen Menge eines Polyethergemischs erhalten. Das Polyethergemisch bestand zu gleichen Gewichtsteilen aus (i) dem Propoxylierungsprodukt der OH-Zahl 56 und der OH-Funktionalität 2,4 eines Gemischs aus Wasser und Trimethylolpropan und (ii) einem Polyetherpolyol der OH-Zahl 35, hergestellt durch Propoxylierung von Glycerin und anschließender Ethoxylierung des Propoxylierungsprodukts (Gewichtsverhältnis PO:EO = 87:13);
28,8 Gew.-Teile DETDA;
0,9 Gew.-Teilen eines handelsüblichen Stabilisators auf Basis eines Polyetherpolysiloxans (L 5430 der Firma Union Carbide);
5,6 Gew.-Teile eines Gemischs aus gleichen Gewichtsteilen (i) Zinkstearat und (ii) dem Anlagerungsprodukt von 5 Mol Propylenoxid an 1 Mol Ethylendiamin (inneres Formtrennmittel);
6,1 Gew.-Teile einer hochmolekularen Polyrizinolsäure mit einer Säurezahl von unter 5 (inneres Formtrennmittel).

### B-Komponente:

®Desmodur M 53 (Polyester-modifiziertes 4,4′-Diisocyanatodiphenylmethan mit einem NCO-Gehalt von 19 Gew.-%, Handelsprodukt der Bayer AG).

Die genannten Komponenten wurden entsprechend den oben gemachten Angaben bezüglich der Verarbeitungsbedingungen unter Einhaltung einer NCO-Kennzahl von 100 (Beispiel 2a) und 110 (Beispiel 2b) zu Elastomer-Platten der Dichte 1,15 g/cm³ verarbeitet.

### Beispiel 3

Beispiel 2a (Kennzahl = 100) wurde wiederholt mit dem einzigen Unterschied, daß der A-Komponente 50 Gew.-%, bezogen auf das Gewicht der füllstoff-freien A-Komponente, an handelsüblichen Glasflakes (Glasflakes 1/64 der Firma Owens-Corning) zugemischt wurden.

Es resultieren Elastomer-Platten einer Dichte von 1,29 g/cm³.

### Beispiele 4 bis 13 (erfindungsgemäßes Verfahren)

In den nachfolgenden Beispielen 4 bis 13 wird das erfindungsgemäße Verfahren erläutert. Bei der Durchführung dieser Versuche wurden die Prüfkörper in die auf die Preßtemperatur T vortemperierte hydraulische Presse (Modell 200 T der Firma Schwabenthan) eingelegt und sofort mit dem Preßdruck P beaufschlagt. Nach der Preßzeit von 2 Minuten wurden die Preßlinge in der, mit einer Durchflußwasserkühlung ausgerüsteten Presse unter Preßdruck während eines Zeitraums von 3 Minuten abgekühlt.

### Beispiel 4

Ausgehend von einer Platte gemäß Beispiel 1b (Kennzahl = 110, Dicke = 4 mm) wurden unter einem Druck von 200 bar bei einer Temperatur von 150°C Platten der Dicke 1 mm erhalten. Die Dicke wurde dabei über einen Abstandshalter in der Presse definiert.

Die nachfolgende Tabelle 1 enthält einige mechanische Daten des Materials vor und nach der erfindungsgemäßen thermoplastischen Verformung.

**Tabelle 1**

| | | vorher | nachher |
|---|---|---|---|
| Zugfestigkeit | DIN 53504 | 36 MPa | 32 MPa |
| Bruchdehnung | DIN 53504 | 300 % | 290 % |
| Härte Shore A | DIN 53505 | 88 | 88 |
| G′-Modul 100°C | DIN 53445 | 110 MPa | 130 MPa |
| Biege-E-Modul 120°C | ASTM D-790 | 276 MPa | 360 MPa |
| Zähigkeit -40°C | DIN 53443 | 0,4 J | 1,2 J |
| Wärmestand (TMA¹⁾) | | 230°C | 280°C |

| | | | |
|---|---|---|---|
| 1) Thermomechanische Analyse, endgültige Erweichung | | | |

### Beispiel 5

Aus einer Platte gemäß Beispiel 1a (Kennzahl = 100, Dicke = 4 mm) wurde ein Teil der Abmessung 20 x 30 x 4 mm herausgeschnitten. Dieser Prüfling wurde dann in einer Kastenform der Abmessungen 20 x 50 x 10 mm mit Versteifungsrippen und außen befindlichen, zylindrischen Eckverstärkern gepreßt; die Wanddicke des resultierenden Kastens betrug ca. 1 mm. Das übrigbleibende Material bildete eine an der Oberseite des Kastens anhängende Platte der gleichen Dicke (1 mm); dieses Material wurde abgeschnitten.

### Beispiel 6

Beispiel 5 wurde unter Verwendung eines entsprechenden Prüflings auf Basis des gemäß Beispiel 2a hergestellten Polyisocyanat-Polyadditionsprodukts wiederholt. Es resultierte ebenfalls ein Kasten der in Beispiel 5 genannten Abmessungen.

### Beispiel 7

Beispiel 5 wird wiederholt, jedoch unter Verwendung eines Prüflings auf Basis der gemäß Beispiel 3 hergestellten Platte. Außerdem wurde die Preßtemperatur auf 165°C erhöht. Es resultiert ebenfalls ein Kasten der in Beispiel 5 genannten Abmessungen.

### Beispiel 8

Ausgehend von einem Teilstück der Platte gemäß Beispiel 1a (Kennzahl = 100, Dicke = 4 mm) wurde bei 150°C und einem Druck von 300 bar eine Folie der Dicke 0,1 mm hergestellt.

### Beispiel 9

Ausgehend von Rundscheiben des Durchmessers 27 mm und der Dicke 4 mm aus der Platte gemäß Beispiel 1a wurden Rundscheiben kleinerer Dicke und größeren Durchmessers gepreßt. Die Dicke der Preßlinge in Abhängigkeit von den Preßbedingungen wird in Tabelle 2 gezeigt.

### Beispiel 10

Es wurde entsprechend Beispiel 9 verfahren, jedoch unter Verwendung von Rundscheiben auf Basis der Platte gemäß Beispiel 1c. Die Ergebnisse werden in Tabelle 3 mitgeteilt.

### Beispiel 11

Es wird entsprechend Beispiel 9 verfahren, jedoch unter Verwendung von Rundscheiben auf Basis der Platte gemäß Beispiel 2a. Die Ergebnisse werden in Tabelle 4 mitgeteilt.

### Beispiel 12

Es wird entsprechend Beispiel 9 verfahren, jedoch unter Verwendung von Rundscheiben aus der Platte gemäß Beispiel 2b. Die Ergebnisse werden in Tabelle 5 mitgeteilt.

### Beispiel 13

Aus faserförmigen (Länge: 1 bis 10 mm, Dicke: ca. 0,5 mm) Sägeschnipseln auf Basis der Materials gemäß Beispiel 1a, die bei der Probenpräparation anfielen, wurden bei einer Temperatur von 150°C und einem Druck von 250 bar homogene Folien der Dicke 0,5 mm erhalten.

**Tabelle 2**

| Druck [bar] | Probendicke | | |
|---|---|---|---|
| | 70°C | 100°C | 150°C |
| 20 | 2,5 mm | 2,2 mm | 1,2 mm |
| 50 | 2,2 mm | 1,6 mm | 0,9 mm |
| 70 | 2,1 mm | 1,4 mm | 0,7 mm |
| 100 | 2,0 mm | 1,4 mm | 0,7 mm |
| 150 | 1,7 mm | 1,2 mm | 0,6 mm |
| 200 | 1,7 mm | 1,0 mm | 0,6 mm |
| 250 | | | 0,6 mm |
| 300 | | | 0,6 mm |
| 350 | | | 0,6 mm |

**Tabelle 3**

| Druck [bar] | Probendicke | | |
|---|---|---|---|
| | 70°C | 100°C | 150°C |
| 20 | 3,0 mm | 2,5 mm | 1,2 mm |
| 50 | 2,5 mm | 2,0 mm | 1,2 mm |
| 70 | 2,5 mm | 1,7 mm | 1,0 mm |
| 100 | 2,5 mm | 1,6 mm | 1,0 mm |
| 150 | 2,3 mm | 1,2 mm | 0,8 mm |
| 200 | 2,3 mm | 1,2 mm | 0,7 mm |
| 250 | | | 0,7 mm |
| 300 | | | 0,7 mm |
| 350 | | | 0,6 mm |

**Tabelle 4**

| Druck [bar] | Probendicke | | |
|---|---|---|---|
| | 70°C | 100°C | 150°C |
| 20 | 1,7 mm | 1,6 mm | 1,2 mm |
| 50 | 1,6 mm | 1,5 mm | 1,0 mm |
| 70 | 1,5 mm | 1,4 mm | 0,7 mm |
| 100 | 1,4 mm | 1,2 mm | 0,6 mm |
| 150 | 1,4 mm | 1,2 mm | 0,5 mm |
| 200 | 1,4 mm | 1,0 mm | 0,5 mm |
| 250 | 1,4 mm | 1,0 mm | 0,5 mm |
| 300 | 1,4 mm | 0,9 mm | 0,5 mm |
| 350 | 1,3 mm | 0,9 mm | 0,5 mm |

**Tabelle 5**

| Druck [bar] | Probendicke | | |
|---|---|---|---|
| | 70°C | 100°C | 150°C |
| 20 | 2,4 mm | 2,0 mm | 1,3 mm |
| 50 | 2,2 mm | 1,8 mm | 1,2 mm |
| 70 | 2,0 mm | 1,6 mm | 1,1 mm |
| 100 | 1,8 mm | 1,4 mm | 1,0 mm |
| 150 | 1,5 mm | 1,4 mm | 0,9 mm |
| 200 | 1,5 mm | 1,4 mm | 0,8 mm |
| 250 | 1,4 mm | 1,2 mm | 0,7 mm |
| 300 | 1,4 mm | 1,0 mm | 0,6 mm |
| 350 | 1,3 mm | 1,0 mm | 0,6 mm |

### Beispiel 14

Aus einer Platte gemäß Beispiel 3 wurde ein Teil der Abmessung 20 x 30 x 4 mm herausgeschnitten. Dieser Prüfling wurde anschließend in einem Heizschrank auf 200°C erhitzt und sofort anschließend innerhalb einer Preßzeit von 15 Sekunden bei einem Preßdruck von 350 bar zu dem in Beispiel 5 des Hauptpatents beschriebenen Kasten, jedoch mit einer Wanddicke von 2 mm, verformt. Auf ein Erhitzen der Formpresse wurde hierbei jedoch verzichtet.

### Beispiel 15

Beispiel 14 wurde wiederholt, jedoch unter Verwendung eines gemäß Beispiel 2a) hergestellten Polyisocyanat-Polyadditionsprodukts. Der Prüfling wurde außerdem auf lediglich 150°C vorerhitzt und in einer bei Raumtemperatur befindlichen Formpresse zu einem Kasten gemäß Beispiel 1 verformt. Die Preßzeit betrug hierbei 20 Sekunden, der Preßdruck lag bei 350 bar.

## Patentansprüche

1. Verfahren zur Herstellung von Formkörpern oder Folien auf Basis von Polyisocyanat-Polyadditionsprodukten einer Dichte von mindestens 0,8 g/cm³ durch Weiterverarbeitung von elastomeren Polyisocyanat-Polyadditionsprodukten durch erneute thermoplastische Formgebung bei bei mindestens 50°C liegenden Temperaturen und mindestens 5 bar liegenden Drücken, dadurch gekennzeichnet, daß man als elastomere Polyisocyanat-Polyadditionsprodukte solche verwendet, die durch Umsetzung von
a) aromatischen Polyisocyanaten,
b) Verbindungen mit einem Molekulargewicht zwischen 1800 und 12000 welche im statistischen Mittel mindestens 2,5 gegenüber Isocyanatgruppen reaktionsfähige Gruppen, d.h. eine über 2,5 liegende mittlere Funktionalität aufweisen,
gegebenenfalls
c) Diaminen mit zwei primären und/oder sekundären, aromatisch gebundenen Aminogruppen des Molekulargewichtsbereichs 108 bis 400, in einer Menge von bis zu 40 Gew.-% bezogen auf Komponente b)
sowie gegebenenfalls
d) gegebenenfalls Ethergruppen aufweisenden (Cyclo)alkanpolyolen oder (Cyclo)alkanpolyaminen des Molekulargewichtsbereichs 60 bis 1799
sowie gegebenenfalls unter Mitverwendung von
e) den aus der Polyurethanchemie an sich bekannten Hilfs- und Zusatzmitteln
unter Einhaltung einer Isocyanatkennzahl von 60 bis 140 im Ein- oder Mehrstufenverfahren hergestellt worden sind, mit der Maßgabe, daß mindestens eine der Komponenten c) oder d) in einer solchen Menge mitverwendet wird, daß die Gesamtmenge der Komponenten c) und d) mindestens 5 Gew.-%, bezogen auf das Gewicht der Komponente b) beträgt.

2. Verfahren gemäß Anspruch 1, dadurch gekennzeichnet, daß man als Polyisocyanat-Polyadditionsprodukte solche verwendet, bei denen das Molverhältnis von eingebauten Harnstoffgruppen zu eingebauten Urethangruppen bei mindestens 2:1 liegt.

3. Verfahren gemäß Anspruch 1 und 2, dadurch gekennzeichnet, daß die der thermoplastischen Formgebung zuzuführenden Polyisocyanat-Polyadditionsprodukte Füll-und/oder Verstärkungsstoffe in einer Menge von bis zu 80 Gew.-%, bezogen auf das Gesamtgewicht, enthalten.

4. Verfahren gemäß Anspruch 1 bis 3, dadurch gekennzeichnet, daß die der thermoplastischen Formgebung zuzuführenden Polyisocyanat-Polyadditionsprodukte in Form von Granulaten, Schnipseln und/oder anderen Klein- und Kleinstteilen vorliegen.

5. Verfahren gemäß Anspruch 1 bis 3, dadurch gekennzeichnet, daß die der thermoplastischen Formgebung zuzuführenden Polyisocyanat-Polyadditionsprodukte in Form von Platten vorliegen, die durch Umsetzung der Ausgangsmaterialien in geschlossenen Formen nach dem Reaktionsspritzgußverfahren hergestellt worden sind.

6. Verfahren gemäß Anspruch 5, dadurch gekennzeichnet, daß die thermoplastische Formgebung durch Tiefziehen der Platten erfolgt.

## Claims

1. A process for the production of mouldings or films based on polyisocyanate polyadducts having a density of at least 0.8 g/cm³ by further processing of elastomeric polyisocyanate polyadducts by thermoplastic remoulding at temperatures of at least 50°C and under pressures of at least 5 bar, characterized in that the elastomeric polyisocyanate polyadducts used are those obtained by reaction of
a) aromatic polyisocyanates,
b) compounds having a molecular weight of 1,800 to 12,000 and containing on a statistical average at least 2.5 isocyanate-reactive groups, i.e. having an average functionality above 2.5,
optionally
c) diamines containing at least two primary and/or secondary aromatically bound amino groups and having a molecular weight in the range from 108 to 400 in a quantity of up to 40% by weight
and, optionally,
d) (cyclo)alkane polyols or (cyclo)alkane polyamines optionally containing ether groups and having a molecular weight in the range from 60 to 1,799,
optionally using
e) the auxiliaries and additives known per se from polyurethane chemistry
in one or more stages at an isocyanate index of 60 to 140, with the proviso that at least one of components c) or d) is used in such a quantity that the total quantity of components c) and d) amounts to at least 5% by weight, based on the weight of component b).

2. A process as claimed in claim 1, characterized in that the polyisocyanate polyadducts used are those in which the molar ratio of incorporated urea groups to incorporated urethane groups is at least 2:1.

3. A process as claimed in claims 1 and 2, characterized in that the polyisocyanate polyadducts to be subjected to thermoplastic moulding contain fillers and/or reinforcing materials in a quantity of up to 80% by weight, based on the total weight.

4. A process as claimed in claims 1 to 3, characterized in that the polyisocyanate polyadducts to be subjected to thermoplastic moulding are present in the form of granules, chips and/or other small and ultra-small fragments.

5. A process as claimed in claims 1 to 3, characterized in that the polyisocyanate polyadducts to be subjected to thermoplastic moulding are present in the form of sheets which have been obtained by reaction of the starting materials in closed moulds by the reaction injection moulding technique.

6. A process as claimed in claim 5, characterized in that the sheets are thermoplastically moulded by thermoforming.

## Revendications

1. Procédé de production de corps moulés ou de films à base de produits de polyaddition de polyisocyanates ayant une masse volumique d'au moins 0,8 g/cm³ par transformation de produits élastomères de polyaddition de polyisocyanates par un nouveau formage thermoplastique à des températures d'au moins 50°C et à des pressions d'au moins 5 bars, caractérisé en ce qu'on utilise comme produits élastomères de polyaddition de polyisocyanates des produits de ce type qui ont été obtenus par réaction
a) de polyisocyanates aromatiques,
b) de composés ayant un poids moléculaire compris entre 1800 et 12 000 qui présentent en moyenne statistique au moins 2,5 groupes aptes à réagir vis-à-vis de groupes isocyanate, c'est-à-dire une fonctionnalité moyenne au-dessus de 2,5,
le cas échéant
c) de diamines portant des groupes amino primaires et/ou secondaires en liaison aromatique, de poids moléculaire compris dans la plage de 108 à 400, en quantités allant jusqu'à 40 % en poids par rapport au composant b),
ainsi que, le cas échéant
d) de (cyclo)alcanepolyols ou de (cyclo)alcanepolyamines présentant éventuellement des groupes éther, de poids moléculaire compris dans la plage de 60 à 1799
ainsi que le cas échéant avec utilisation simultanée
e) des substances auxiliaires et des additifs d'emploi connu dans la chimie des polyuréthannes
avec maintien d'un indice d'isocyanate de 60 à 140 par le procédé à une seule ou plusieurs étapes, sous réserve que l'un au moins des composants c) ou d) soit utilisé en une quantité telle que la quantité totale des composants c) et d) s'élève au moins à 5 % en poids, par rapport au poids du composant b).

2. Procédé suivant la revendication 1, caractérisé en ce qu'on utilise comme produits de polyaddition de polyisocyanates, des produits de ce type dans lesquels le rapport molaire des groupes urée incorporés aux groupes uréthannes incorporés soit d'au moins 2:1.

3. Procédé suivant les revendications 1 et 2, caractérisé en ce que les produits de polyaddition de polyisocyanates devant être exposés au formage thermoplastique contiennent des charges et/ou des substances de renforcement en une quantité allant jusqu'à 80 % en poids par rapport au poids total.

4. Procédé suivant les revendications 1 à 3, caractérisé en ce que les produits de polyaddition de polyisocyanates exposés au formage thermoplastique se présentent sous forme de granules, de confettis et d'autres éléments de petites et très petites dimensions.

5. Procédé suivant les revendications 1 à 3, caractérisé en ce que les produits de polyaddition de polyisocyanates exposés au formage thermoplastique se présentent sous forme de plaques qui ont été produites par réaction des matières de départ dans des moules fermés, par le procédé de moulage réactif par injection.

6. Procédé suivant la revendication 5, caractérisé en ce que le formage thermoplastique est effectué par emboutissage des plaques.
